# EUROPÄISCHE PATENTSCHRIFT

(11) **EP 3 406 806 B1**
(45) Veröffentlichungstag und Bekanntmachung des Hinweises auf die Patenterteilung: **09.09.2020**
(21) Anmeldenummer: 18174102.6
(22) Anmeldetag: 24.05.2018
(51) Int. Cl.: E03B 7/07, C02F 1/42, F16K 47/00, F16K 11/07, C02F 1/00, F16K 27/06

(54) **ARMATURENANORDNUNG MIT KOMBINATIONSARMATUR UND WASSERBEHANDLUNGSEINHEIT UND VERFAHREN ZUR AUFBEREITUNG VON TRINKWASSER**
FITTING ASSEMBLY WITH CONNECTION PIECE AND WATER TREATMENT UNIT AND METHOD OF TREATING DRINKING WATER
DISPOSITIF D'ARMATURE POURVU D'ARMATURE COMBINÉE ET UNITÉ DE TRAITEMENT DE L'EAU ET PROCÉDÉ DE PRÉPARATION DE L'EAU POTABLE

(30) Priorität: 26.05.2017 DE 202017103177 U
(43) Veröffentlichungstag der Anmeldung: 28.11.2018
(73) Patentinhaber: Hans Sasserath GmbH & Co. KG., 41352 Korschenbroich (DE)
(72) Erfinder: Hecking, Willi, 41372 Niederkrüchten-Elmpt (DE)
(74) Vertreter: Weisse, Renate

(56) Entgegenhaltungen:
- EP-A2- 2 662 501
- DE-A1-102010 005 459
- DE-A1-102013 102 460
- DE-U1-202014 102 880

## Beschreibung

### Technisches Gebiet

Die Erfindung betrifft eine Armaturenanordnung enthaltend eine Kombinationsarmatur, eine an die Kombinationsarmatur angeschlossene Wasserenthärtungs- oder andere Wasserbehandlungseinheit und eine Steuer- und Auswerteeinheit, wobei die Kombinationsarmatur enthält
(a) ein Gehäuse mit einem an eine Trinkwasserversorgung anschließbaren Einlass und einem Auslass zur Bereitstellung von Trinkwasser mit definierter Härte;
(b) einen Auslassanschluss und einen Einlassanschluss zum Anschließen der Wasserbehandlungseinheit;
(c) eine Verschneideeinrichtung zum Verschneiden von behandeltem Trinkwasser mit Rohwasser in Form von unbehandeltem Trinkwasser zur Bereitstellung von Trinkwasser mit definierter Härte, mit Stellmitteln zur Einstellung der Menge an Rohwasser, welche dem behandelten Trinkwasser beigemischt wird;
(d) einen Strömungsmesser zur Erfassung der Strömungsmenge durch die Kombinationsarmatur, mit Mitteln zur Übertragung der vom Strömungsmesser erzeugten Signale an die Steuer- und Auswerteeinheit;
(e) eine Absperrung zum Absperren der gesamten Strömung durch die Kombinationsarmatur.

Die Erfindung betrifft ferner ein Verfahren zur Aufbereitung von Trinkwasser.

Unter einer Armaturenanordnung wird insbesondere eine Armatur mit einem Armaturengehäuse, beispielsweise aus Metall, verstanden, an welcher weitere Komponenten und Anschlüsse vorgesehen sind, wie etwa Absperrungen, Rückflussverhinderern, Auslässen, Einlässen, Rückflussverhinderer, Druckminderer, Filter, Steuerungen, Kommunikationseinrichtungen, Motoren und dergleichen. Je nach Ausgestaltung kann die Armatur in der Armaturenanordnung eine oder mehrere Funktionalitäten haben.

Das Trinkwasser, welches von den Wasserwerken bereitgestellt wird, enthält neben anderen Ionen auch Kalziumionen, welche in den Rohleitungen, Armaturen und Haushaltsgeräten zu Verkalkung führen können. Der Kalziumgehalt wird als Wasserhärte angegeben. Eine hohe Wasserhärte ist unerwünscht.

Durch geeignete Wasserbehandlung, beispielsweise mittels Ionentauscher, können die Kalziumionen aus dem Trinkwasser entfernt werden. Das Wasser ist dann vollenthärtet. Kalzium ist jedoch in geringen Mengen gesundheitsfördernd. Eine vollständige Enthärtung ist daher gar nicht sinnvoll. Zudem hat der Ionentauscher eine begrenzte Kapazität. Nach einer gewissen Wassermenge, die von der Wasserhärte des Rohwassers abhängt, ist eine Regenerierung erforderlich.

Es gibt Anwendungen, bei denen das Rohwasser und das enthärtete Wasser gemischt (verschnitten) werden, so dass sich eine gewünschte Wasserhärte am Ausgang der Verschneideeinrichtung ergibt. Bekannte Anordnungen messen die Wasserhärte von Rohwasser, enthärtetem Wasser und gemischtem Wasser.

Beim Leckageschutz wird eine Absperrung, beispielsweise ein Kugelhahn, betätigt und die Wasserversorgung eines Gebäudes oder eines einzelnen Strangs unterbrochen, wenn untypische oder unerwünschte Strömungszustände auftreten. Solche Strömungszustände können insbesondere Rohrbruch sein, d.h. plötzlicher, sehr hoher Volumenstrom, oder Lecks, d.h. lang andauernde, geringe Volumenströme. Ein blockierter Filter kann beispielsweise ein unerwünschter Strömungszustand sein.

### Stand der Technik

Aus der DE 102007059058 C5 (Judo) ist ein Verfahren zum Betrieb einer Wasserenthärtungsanlage mit einer Ionentauschervorrichtung bekannt, die eine Verschneidevorrichtung aufweist. Das Rohwasser wird in Teilströme aufgeteilt. Ein Teilstrom wird enthärtet. Der andere Teilstrom wird dem enthärteten Wasser mit einstellbarem Verhältnis zugemischt. Bei der bekannten Anordnung wird die Leitfähigkeit des Rohwassers gemessen und die Gesamthärte über eine Kalibrierkennlinie bestimmt.

DE 10 2014 101 285 A1 beschreibt eine Anordnung zur Enthärtung von Trinkwasser mit einem Verschneideventil, die eine Steuerung aufweist, die über ein Netzwerk mit einem Server verbunden ist. Der Server ermittelt den Härtegrad des Wassers aus der geographischen Position der Anordnung.

DE 20 2009 008 421 U1 offenbart eine Adapterarmatur zum Anschließen einer Ionentauscheranordnung an eine Rohrleitung. Die Anordnung weist ein Verschneideventil zum Kontrollieren der Menge des durch die Bypassöffnung fließenden, nicht enthärteten Wassers auf, mit dem der Härtegrad einstellbar ist. Das Verschneideventil ermöglicht es, die gesamte Strömung vom Einlass zum Auslass zu leiten, wenn die Ionentauscheranordnung zum Warten oder Austauschen abgekoppelt ist.

DE 20 2014 102 880 U1 offenbart eine Wasserarmatur mit einem in einem gemeinsamen Gehäuse angeordneten Druckminderer und Filter. Die Anordnung weist einen Kugelhahn und strömungsmessende Mittel auf. Eine Steuer- und Auswerteeinheit wertet die Signale der strömungsmessenden Mittel aus und schließt den Kugelhahn bei untypischen Strömungsverhältnissen. Die Anordnung offenbart auch die Verwendung eines Ionentauschers mit einem nicht näher beschriebenen Verschneideventil.

DE 20 2014 106 162 U1 offenbart eine Verschneideanordnung für Wasserbehandlungsgeräte. Die Anordnung weist einen Strömungsmesser und einen Kugelhahn, sowie eine eigene Steuerungseinheit auf. Der Strömungsmesser dient zur Erfassung des Volumentstroms des Rohwassers. Aus dem Volumenstrom wird die eingestellte Wasserhärte ermittelt, ohne die Leitfähigkeit zu messen.

DE 20 2015 101 006 U1 und DE 10 2013 102 460 A1 offenbaren Wasserbehandlungsvorrichtungen für Heizungswasser.

Nachteilig bei den bekannten Anordnungen ist es, dass eine Vielzahl von Komponenten erforderlich ist, um aufbereitetes Wasser mit der gewünschten Härte bereitzustellen und gleichzeitig untypische Strömungszustände, wie Leckage oder Rohrbruch, zu erkennen und abzustellen. Die bekannten Geräte werden hintereinander in der Rohrleitung im Eingangsbereich einer Trinkwasserinstallation installiert. Alle bekannten Lösungen erfordern einen hohen Montageaufwand und eine Vielzahl von Dichtungen. Die Verwendung von mehreren Steuergeräten ist teuer und erfordert Know-How, Montageaufwand und ist störanfällig.

### Offenbarung der Erfindung

Es ist Aufgabe der Erfindung, eine Vorrichtung der eingangs genannten Art zu schaffen, die eine Vielzahl von Funktionalitäten im Eingangsbereich einer Trinkwasserinstallation wirtschaftlich bereitstellt.

Erfindungsgemäß wird die Aufgabe dadurch gelöst, dass
(g) die Steuer- und Auswerteeinheit Mittel zur Erfassung von Leckage oder anderen untypischen und/oder unerwünschten Strömungszuständen aus den vom Strömungsmesser übertragenen Signalen aufweist; und
(h) die Absperrung mit Steuersignalen der Steuer- und Auswerteeinheit in Abhängigkeit vom zugehörigen Strömungszustand und vom Zustand der Wasserbehandlungseinheit oder der durch die Wasserbehandlungseinheit geflossenen Rohwassermenge steuerbar ist.

Bei der Erfindung wird eine Kombinationsarmatur geschaffen, die nicht nur zum Verschneiden von enthärtetem Wasser mit Rohwasser geeignet ist, sondern deren Komponenten auch zum Erfassen von Leckage verwendet werden. Der Strömungsmesser liefert einerseits Informationen über den Volumenstrom des Rohwassers, aus dem der Zeitpunkt ermittelt werden kann, wann ein Ionentauscher erschöpft ist und aus dem ermittelt werden kann, welche Einstellung die Verschneideeinrichtung erfordert. Zum anderen können untypische Strömungszustände mit dem Strömungsmesser erfasst werden. Anders als bekannte Anordnungen mit Verschneidung und Leckageschutz ist nur eine einzige Steuerung erforderlich. Die Absperrung kann wie bei anderen Leckageschutzanordnungen verwendet werden, um den Wasserfluss bei Leckage zu unterbrechen. Hierzu ist, anders als bei Wartungsabsperrungen, eine Steuerung und ein Motor zwingend erforderlich.

Bei einer Ausgestaltung der Erfindung ist die Steuer- und Auswerteeinheit in die Wasserbehandlungseinheit integriert. Die Wasserbehandlungseinheit ist typischerweise voluminös und steht auf dem Boden. Sie wird durch die Steuer- und Auswerteeinheit nur wenig belastet. Dafür entfällt die Steuerung an der Verschneideeinheit. Diese wird dadurch klein und leicht und kann gut montiert werden.

Bei einer weiteren Ausgestaltung der Erfindung ist eine Druckminderer-Filterkombination oder ein Druckminderer und/oder ein Filter im Strömungsweg zwischen Einlass und Auslass vorgesehen. Eine solche Druckminderer-Filterkombination oder ein Filter oder ein Druckminderer kann beispielsweise an einen entsprechenden Flansch an der Kombinationsarmatur angeflanscht werden. Dann entsteht eine Multifunktionsarmatur, die alle Funktionalitäten, die im Eingangsbereich einer Trinkwasserversorgung für ein Gebäude erforderlich sind. Das Wasser wird entkalkt, auf den richtigen Druck eingestellt und gefiltert. Außerdem wird Leckage erfasst.

Der Strömungsmesser kann eine Turbine umfassen, die gemeinsam mit einem Rückflussverhinderer in einer Patrone angeordnet ist, und die Patrone als Ganzes in einen Gehäusestutzen einsetzbar ist. Dadurch wird die Herstellung und Wartung der Turbine und des Rückflussverhinderers erleichtert. Die Turbine weist einen Magneten auf, der mit einem Reed-Kontakt zusammenwirkt. Aus der Drehgeschwindigkeit der Turbine kann der Volumenstrom ermittelt werden.

Es kann weiterhin ein Drucksensor im Strömungsweg vor dem Volumenstrommesser vorgesehen sein, dessen Signale an die Steuer- und Auswerteeinheit übertragen werden. Die Absperrung kann von einem motorbetriebenen Kugelhahn gebildet sein.

Die Verschneideeinrichtung kann von Hand eingestellt werden. Sie kann aber auch motorbetrieben sein, und die Steuer- und Auswerteeinheit kann Mittel zur Regelung der Härte am Auslass auf einen definierten Wert nach Maßgabe der Signale des Leitfähigkeitssensors aufweist.

Eine besonders vorteilhafte Ausgestaltung der Erfindung sieht vor, das die Stellmittel der Verschneideeinrichtung einen Verschneidkolben mit einer sich verjüngenden Öffnung umfassen, welche den Strömungsquerschnitt und damit den Volumenstrom des dem enthärteten Wasser beigemischten Rohwassers definiert.

Eine besonders kompakte Anordnung ergibt sich, wenn vorgesehen ist, dass
(a) der Einlassanschluss und der Auslassanschluss miteinander fluchten,
(b) ein Zentralkanal quer zur Längsachse von Einlassanschluss und Auslassanschluss vorgesehen ist, wobei die Absperrung den Querkanal sperrt,
(c) ein Ventil vorgesehen ist, welches den Verbindungskanal (90) vom Einlassanschluss zum Auslassanschluss in einer Betriebsstellung sperrt und in einer Wartungsstellung öffnet; und
(d) wobei das Ventil die Verbindung zum Auslassanschluss in der Wartungstellung sperrt.

Es kann weiterhin ein Rückflussverhinderer im Einlass, vor der Verschneideeinrichtung und/oder zwischen Einlassanschluss und Auslass vorgesehen sein.

Eine weitere Ausgestaltung der Erfindung sieht einen Leitfähigkeitssensor vor mit Mitteln zur Übertragung der vom Leitfähigkeitssensor erzeugten Signale an die Steuer- und Auswerteeinheit. Mit dem Leitfähigkeitssensor kann überprüft werden, ob sich die Wasserhärte des Rohwassers gegenüber einem ursprünglich gemessenen Härtegrad ändert.

Ausgestaltungen der Erfindung sind Gegenstand der Unteransprüche. Ein Ausführungsbeispiel ist nachstehend unter Bezugnahme auf die beigefügten Zeichnungen näher erläutert.

### Definitionen

In dieser Beschreibung und in den beigefügten Ansprüchen haben alle Begriffe eine dem Fachmann geläufige Bedeutung, welche der Fachliteratur, Normen insbesondere DIN EN 806-1 und DIN EN 1717 und den einschlägigen Internetseiten und Publikationen, insbesondere lexikalischer Art, beispielsweise www.Wikipedia.de, www.wissen.de oder www.techniklexikon.net, der Wettbewerber, forschenden Institute, Universitäten und Verbände, beispielsweise Deutscher Verein des Gas- und Wasserfaches e.V. oder Verein Deutscher Ingenieure, dargelegt sind. Insbesondere haben die verwendeten Begriffe nicht die gegenteilige Bedeutung dessen, was der Fachmann den obigen Publikationen entnimmt.

Weiterhin werden hier folgende Bedeutungen für die verwendeten Begriffe zugrundegelegt:
- Absperrung:: ist jede Art von Einrichtung, welche einen Fluidstrom ganz oder teilweise blockiert. Typische Absperrungen sind Kugelhähne oder Ventile.
- Armatur:: ist ein Bauteil zur Installation in oder an einer Rohrleitung oder anderen Fluidinstallation zum Absperren, Regeln oder Beinflussen von Stoffströmen. Eine Armatur kann einteilig oder mehrteilig ausgebildet sein und wird an einer Stelle in oder an der Rohrleitung installiert. Armaturen sind beispielsweise und nicht abschließend: Anschlussvorrichtungen, Anschlussarmaturen, Hauptabsperrarmaturen, Wartungsarmaturen, Drosselarmaturen, Entnahmestellen, Entnahmearmaturen, Entleerungsarmaturen, Sicherungsarmaturen, Sicherheitsarmaturen und Stellarmaturen.
- Ausgangsdruck: Druck im Auslass und allen mit dem Auslass direkt verbundenen Bereichen innerhalb eines Gehäuses
- Auslass: ist eine ablaufseitige Öffnung in einem Gehäuse, aus welcher ein Stoffstrom herausfließen kann. Die Öffnung kann insbesondere an eine Rohrleitung oder eine weitere Armatur angeschlossen sein oder frei zur Atmosphäre hin öffnen.
- Automatik: Anordnung, die einen Vorgang selbsttätig ohne menschlichen Eingriff steuert oder regelt
- axial: ist die Richtung der Rotationsachse von ganz oder teilweise rotationssymmetrischen Bauteilen, wie etwas Rohren oder langgestreckten Gehäusen. Bei Bauteilen ohne Rotationssymmetrie ist es die Hauptströmungsrichtung in einem Bauteilabschnitt.
- Bohrung: ist jede Art von Verbindung zweier Hohlräume, sowie Sacklöcher.
- Druck: Kraft pro Flächeneinheit
- Druckminderer: ist eine Armatur zur Einstellung eines ausgewählten Drucks an dahinterliegenden Bauteilen.
- Durchgang: ist eine Verbindung, welche Stoffströme ermöglicht.
- Eingangsdruck: Druck im Einlass und allen direkt mit dem Einlass verbundenen Bereichen innerhalb eines Gehäuses.
- Einlass: ist eine zulaufseitige Öffnung in einem Gehäuse, in welchen ein Stoffstrom hineinfließen kann. Die Öffnung kann insbesondere an eine Rohrleitung oder eine weitere Armatur angeschlossen sein oder frei zur Atmosphäre hin öffnen.
- Filter: ist eine Einrichtung, mit welcher Feststoffe aus einem Fluidstrom zurückgehalten werden.
- Fluid: alle Stoffe, die durch geringe Kräfte deformiert werden können. Fluide werden unterteilt in Flüssigkeiten und Gase.
- Gehäuse: Begrenzung für Stoffe, Bauteile, Instrumente und Messgeräte nach außen. Ein Gehäuse kann einteilig oder aus mehreren verbundenen Gehäuseteilen mehrteilig ausgebildet sein und aus einem oder mehreren Materialien bestehen.
- Kolben: Bauteil, das zusammen mit einem umgebenden Gehäuse einen Hohlraum bildet, dessen Volumen sich durch eine Bewegung des Bauteils verändert.
- Motor: Maschine, die mechanische Arbeit verrichtet, indem sie eine Energieform, z.B. thermische, chemische oder elektrische Energie, in Bewegungsenergie umwandelt.
- radial: senkrecht zu einer axialen Richtung.
- Reed-Kontakt: Kontaktzungen, beispielsweise aus einer Eisen-Nickel-Legierung, in einem abgeschlossenen Hohlraum, die magnetisch betätigt werden.
- Rohr: Hohlkörper aus zylindrischen Abschnitten. Dient üblicherweise als Rohrleitung.
- Rückflussverhinderer: Sicherungsarmatur gegen Rückfließen. Eine Vorrichtung, die dazu bestimmt ist, das Rückfließen eines Stoffstroms, entgegen einer bestimmungsgemäßen Fließrichtung zu verhindern.
- Stutzen: Rand oder Übergangsstück an einer Öffnung.
- Ventil: Bauteil zur Absperrung oder Regelung des Durchflusses von Fluiden.

### Kurze Beschreibung der Zeichnungen

- Fig.1: ist eine perspektivische Darstellung einer Kombinationsarmatur für Leckageschutz und zum Aufbereiten von Trinkwasser.
- Fig.2: ist eine Seitenansicht der Armatur aus Figur 1.
- Fig.3: ist eine Vorderansicht der Armatur aus Figur 1.
- Fig.4: ist eine Vorderansicht der Armatur aus Figur 1 ohne Druckminderer-Filteranordnung.
- Fig.5: zeigt die Leckageschutzanordnung der Anordnung aus Figur 1 in einer Ansicht auf den Flansch.
- Fig.6: ist eine Seitenansicht der Armatur aus Figur 5 aus einer Perspektive, die um einen Winkel von 90 Grad versetzt ist.
- Fig.7: ist ein mittiger Vertikalschnitt durch die Anordnung aus Figur 5 quer zur Flanschebene.
- Fig.8: ist ein Vertikalschnitt der Armatur aus Figur 5 entlang einer Schnittebene A-A.
- Fig.9: ist eine perspektivische Ansicht von schräg oben auf die Einlassseite der Anordnung aus Figur 5.

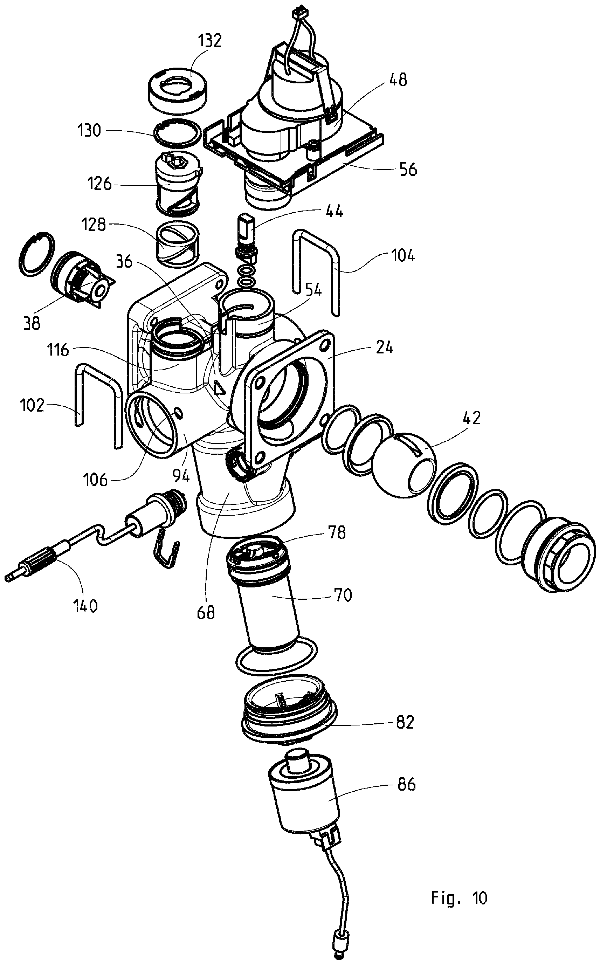

- Fig.10.: ist eine Explosionsdarstellung der Anordnung aus Figur 5.

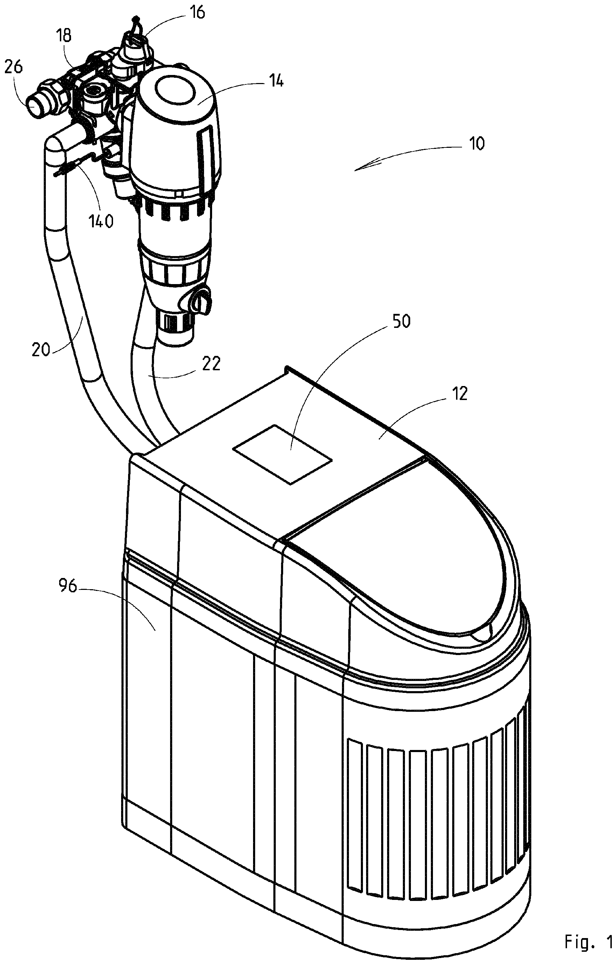

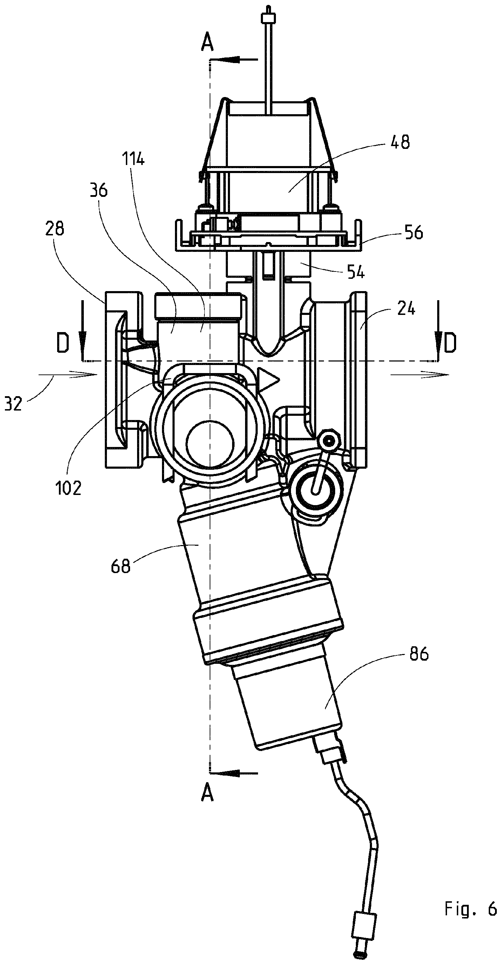

- Fig.1 1: ist ein Vertikalschnitt entlang einer in Figur 6 gezeigten Schnittebene D-D.

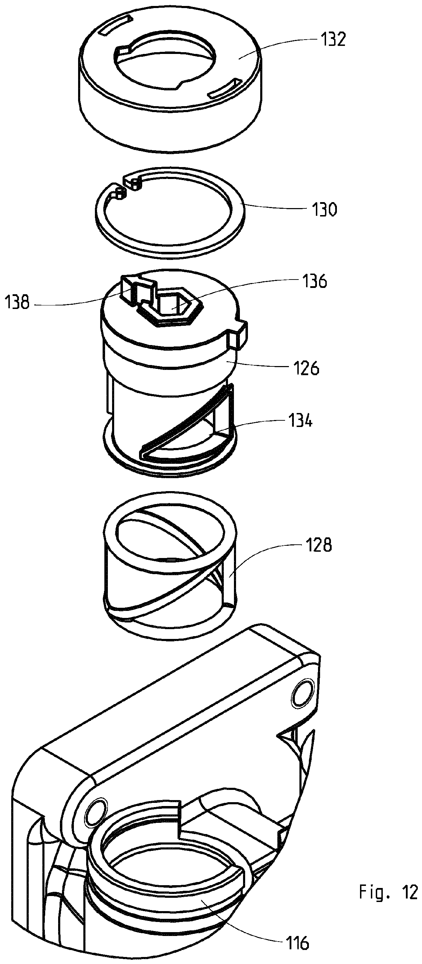

- Fig.12: ist eine Explosionsdarstellung der Verschneideeinrichtung aus der Anordnung aus Figur 1 im Detail.

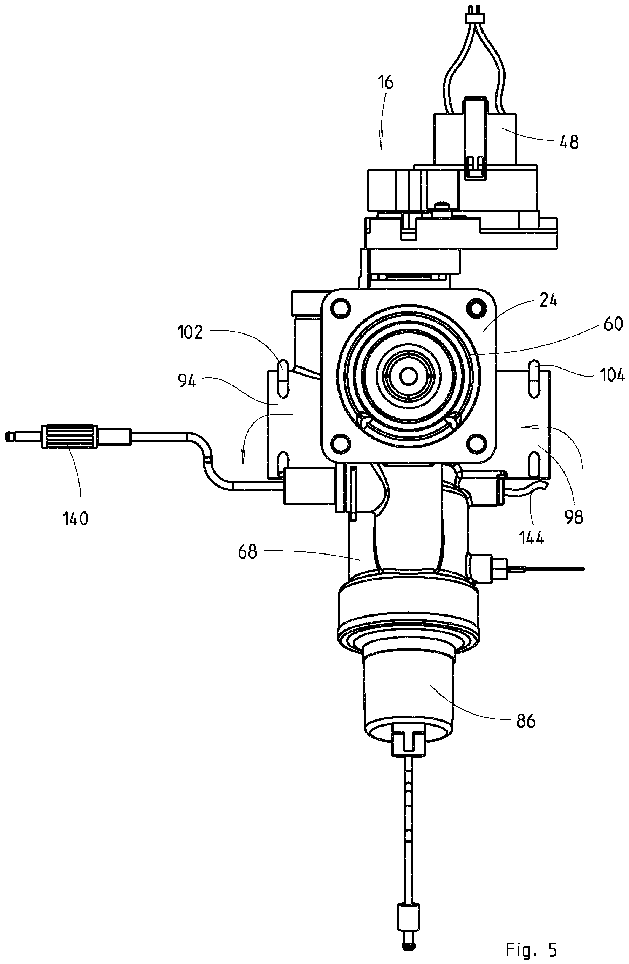

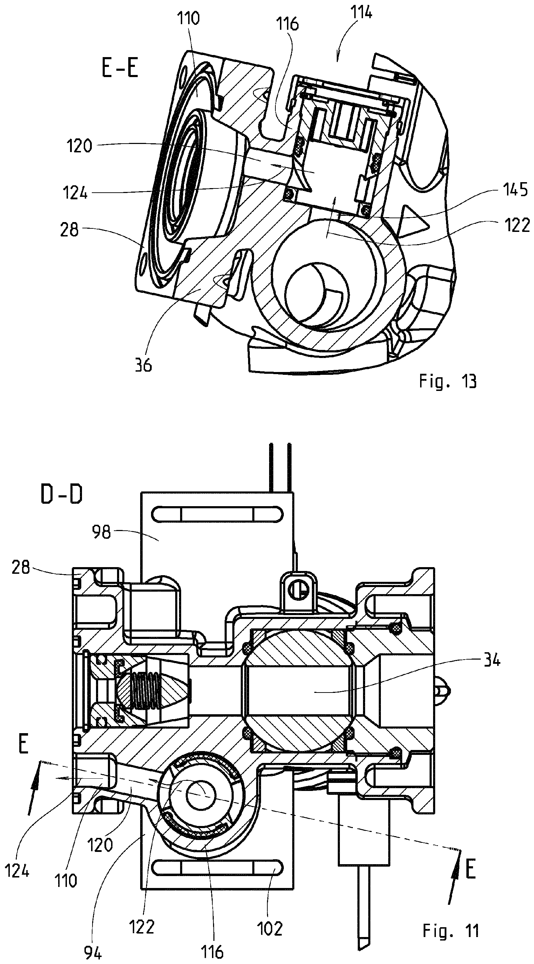

- Fig.13: ist eine Schnittdarstellung eines Teils der Anordnung aus Figur 5 entlang der in Figur 11 gezeigten Schnittebene E-E.

### Beschreibung des Ausführungsbeispiels

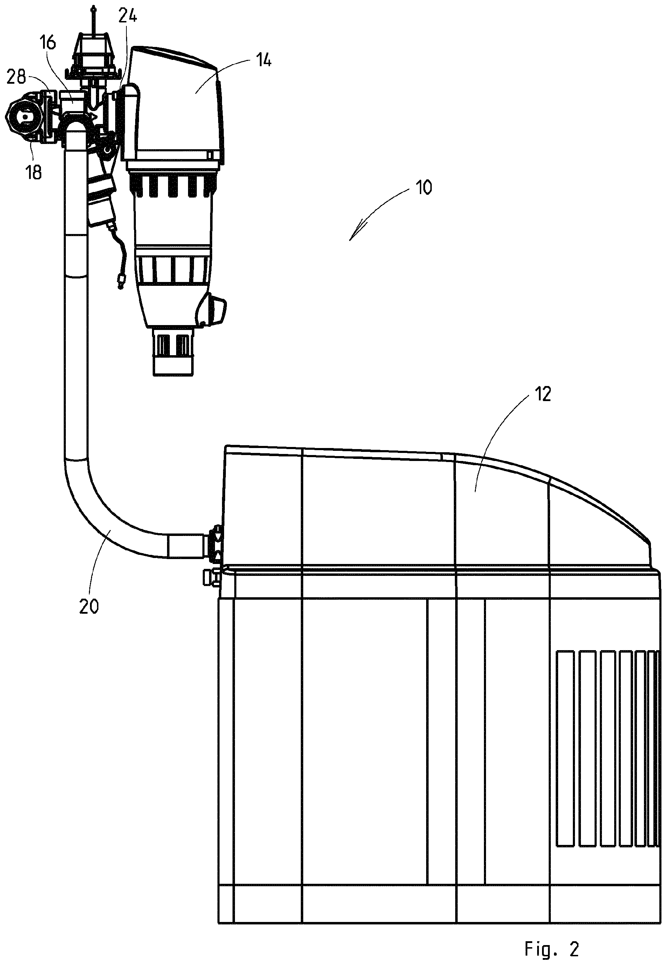

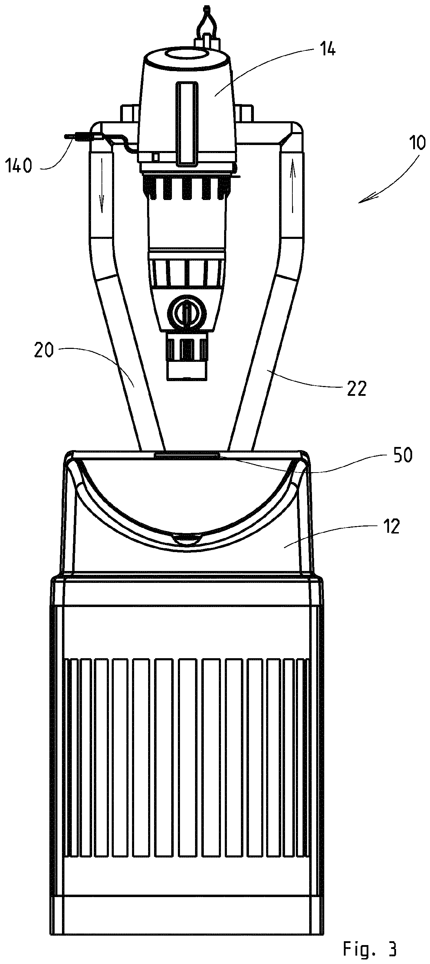

Figuren 1 bis 4 zeigen eine allgemein mit 10 bezeichneten Anordnung zur Wasserbehandlung. Die Anordnung zur Wasserbehandlung umfasst einen Ionentauscher 12, eine Druckminderer-Filteranordnung 14 und eine Kombinationsarmatur für Leckageschutz und Verschneidung 16. Die Kombinationsarmatur 16 ist mit einem nachstehend näher beschriebenen Flansch an eine Anschlussarmatur 18 angeflanscht. Mit der Anschlussarmatur 18 kann die Anordnung in eine Rohrleitung (nicht dargestellt) beispielsweise im Eingangsbereich der Trinkwasserversorgung eines Gebäudes installiert werden. Der Ionentauscher 12 ist mit Schläuchen 20 und 22 an die Kombinationsarmatur 16 angeschlossen.

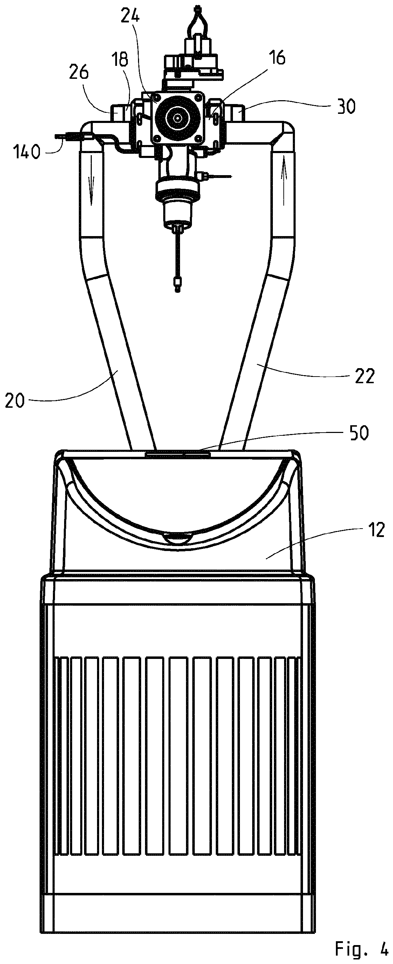

Figur 4 und 5 zeigen die Kombinationsarmatur mit offenem Flansch 24 zum Anflanschen der Druckminderer-Filteranordnung 14. Derartige Flansche sind aus dem Stand der Technik wohl bekannt. Das Wasser fließt in einem Zentralkanal durch die Verbindungsstelle in eine andere Armatur hinein und durch einen um den Zentralkanal herumlaufenden Ringkanal wieder heraus. Es gibt auch Flansche, bei denen das Wasser durch den Ringkanal hineinfließt und durch den Zentralkanal wieder heraus. Die Druckminderer-Filteranordnung 14 ist mittels eines solchen Flansches 24 mit der Kombinationsarmatur 16 verbunden. Die Kombinationsarmatur 16 ist mittels eines solchen Flansches 28 mit der Anschlussarmatur 18 verbunden.

Der Zentralkanal ist innerhalb der Anschlussarmatur 18 in bekannter Weise mit einem Einlass 26 an der Anschlussarmatur 18 verbunden. Der Ringkanal ist innerhalb der Anschlussarmatur 18 in bekannter Weise mit einem Auslass 30 der Anschlussarmatur 18 verbunden. Die Anschlussarmatur 18 wird in der Rohrleitung installiert. Rohwasser tritt am Einlass 26 ein und behandeltes, gefiltertes Wasser mit dem eingestellten Druck tritt am Auslass 30 aus und steht in der Rohrleitung zur weiteren Verwendung zur Verfügung. Die beiden Flansche 24 und 28 an der Kombinationsarmatur 16 sind in Figur 6 gut zu erkennen.

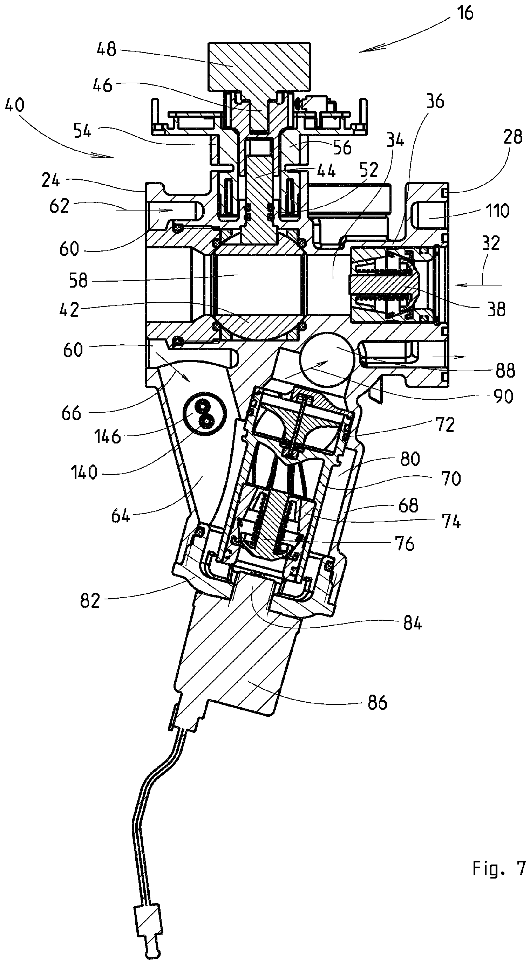

Figur 7 ist ein Vertikalschnitt durch die Kombinationsarmatur 16. Das Wasser tritt durch den Flansch 28 in Richtung des Pfeils 32 in den Zentralkanal 34 ein. Der Zentralkanal 34 ist in einem Armaturengehäuse 36 gebildet, an welches auch die Flansche 24 und 28 angeformt sind. Eingangsseitig ist hinter dem Flansch 28 ein Rückflussverhinderer 38 in den Zentralkanal 34 eingesetzt. Der Rückflussverhinderer 38 öffnet nach links in Figur 7 und verhindert, dass Wasser zurück in die Anschlussarmatur 18 gelangt. Der Rückflussverhinderer 38 ist als Patrone ausgebildet und kann leicht eingesetzt und ausgetauscht werden.

Stromabwärts zum Rückflussverhinderer 38 ist ein Kugelhahn 40 mit einer Kugel 42 im Gehäuse 36 angeordnet. Oben ist die Kugel 42 mit einer Kupplung 44 verbunden. In die Kupplung 44 greift die Welle 46 eines Motors 48. Der Motor 48 wird von einer nachstehend beschriebenen Steuerung 50 gesteuert. Die Kupplung 44 erstreckt sich nach oben durch einen Gehäusestutzen 52 und ist mit Dichtungen gegen diesen abgedichtet. Der Gehäusestutzen 52 ist koaxial in einem äußeren Gehäusestutzen 54 an das Gehäuse 36 angeformt. In den äußeren Gehäusestutzen 54 ist ein Adapter 56 eingesteckt, welcher den Motor 48 trägt und das Drehmoment aufnimmt. Mit dem Motor 48 kann die Kugel 42 um eine vertikale Achse gedreht werden. Figur 7 zeigt die Kugel 42 in geöffneter Stellung. Dann fluchtet die Durchgangsbohrung 58 mit dem Zentralkanal 34.

Wasser kann also vom Flansch 28 durch den Rückflussverhinderer 38 und den Zentralkanal 34 mit der Kugel 42 zum Zentralkanal des Flansches 24 fließen. Dort ist eine bekannte Druckminderer-Filteranordnung 14 angeflanscht. Derartige Druckminderer-Filteranordnungen 14 sind seit langem bekannt und brauchen daher hier nicht näher beschrieben werden. Ein Beispiel für eine solche Anordnung 14 wird unter dem Namen "Drufi-Plus" von der Anmelderin auf der Webseite www.syr.de vertrieben. Falls das Wasser nicht gefiltert werden muss und keine Druckregelung erforderlich ist - etwa weil weitere Geräte eingesetzt werden, die diese Funktionalität übernehmen, kann die Verbindung zum Ringkanal auch über einen einfachen Deckel hergestellt werden. Die Druckminderer-Filteranordnung 14 erfordert keine eigene Steuerung.

Wasser, das aus der Druckminderer-Filter-Anordnung zurückfließt, gelangt über den Flansch 24 in einen Ringkanal 60. Dies ist durch einen Pfeil 62 illustriert. Der Ringkanal 60 mündet in einer schräg nach unten verlaufenden Gehäusebohrung 64. Vom Ringkanal fließt das Wasser in die Gehäusebohrung 64. Das ist durch einen Pfeil 66 illustriert.

An das Gehäuse 36 ist unten ein schräg verlaufender Stutzen 68 angeformt. Der Stutzen 68 öffnet seitlich zur Gehäusebohrung 64. In den Stutzen ist eine als Ganzes montierbare Baugruppe mit einem Gehäuse 70 eingesetzt. Ausgangsseitig, d.h. oben in Figur 7, sitzt eine Turbine 78 in dem Gehäuse 70 der Baugruppe. Stromaufwärts vor der Turbine 78, d.h. weiter unten in Figur 7, ist eine Rückflussverhindererpatrone 74 mit einem Rückflussverhinderer 76 in dem Gehäuse 70 der Baugruppe angeordnet. Dichtungen 72 dichten das untere Ende des Gehäuses 70 der Baugruppe gegen den Stutzen 68 ab. Der Stutzen ist etwas aufgeweitet und bildet einen Ringraum 80, der sich um das Gehäuse 70 der Baugruppe herum erstreckt. Ein Deckel 82 verschließt den Stutzen 68.

Der Deckel 82 ist mit einer Öffnung versehen. Durch die Öffnung erstreckt sich der Messfühler 84 eines Drucksensors 86. Der Drucksensor 86 ermittelt den Wasserdruck vor dem Rückflussverhinderer 76 und übermittelt das Messergebnis über eine Kabelverbindung an die Steuerung 50. Es versteht sich, dass die Messergebnisse auch drahtlos übertragen werden können.

Wasser, das von der Druckminderer-Filteranordnung in den Ringkanal 60 fließt, gelangt über die Bohrung 64 in den Ringraum 80. Von dort fließt es durch den Rückflussverhinderer 76 zur Turbine 78. Die Turbine 78 ist als Flügelrad ausgebildet. Es versteht sich, dass jedes andere Volumenstrommessgerät ebenfalls geeignet ist. Mit der Turbine 78 und einem Reedkontakt wird der Volumenstrom ermittelt. Eine solche Volumenstrommessung zur Erfassung von Leckage und unerwünschten Strömungszuständen ist aus dem Stand der Technik bereits bekannt und braucht hier nicht näher erläutert werden. Die vom Reedkontakt erfassten Signale werden über eine Kabelverbindung an die gemeinsame Steuerung 50 übertragen. Dort werden sie ausgewertet. Für den Fall, dass unerwünschte Strömungszustände, etwa ein Rohrbruch oder dauerhafte, geringe Verbräuche, auftreten, erzeugt die Steuerung 50 ein Steuersignal und schließt den Kugelhahn 40.

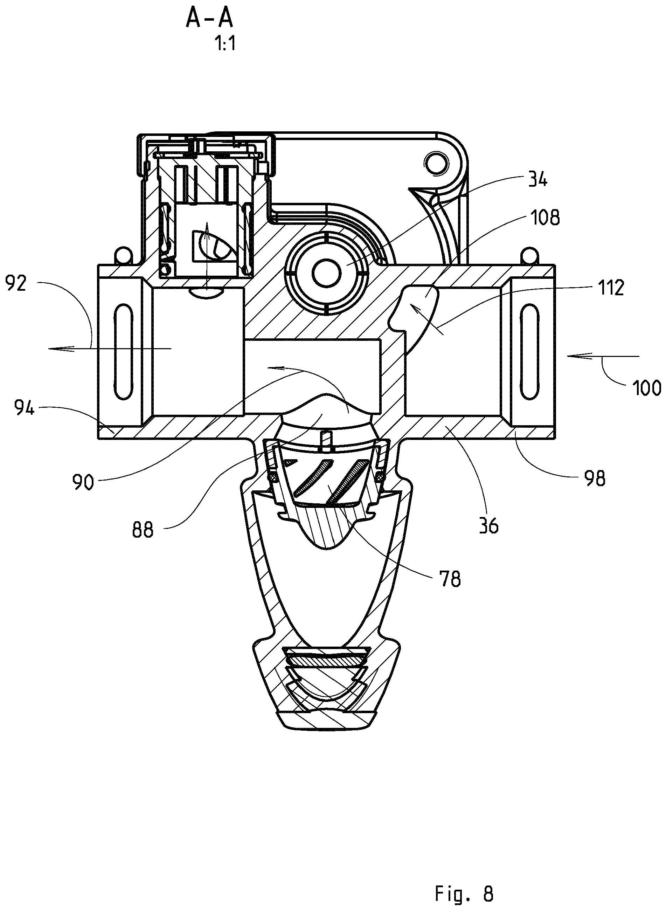

Von der Turbine 78 aus gelangt das Wasser in einen Querkanal 88. Dies ist durch einen Pfeil 90 repräsentiert. Der Querkanal 88 verläuft unterhalb des Zentralkanals 34 quer dazu durch das Gehäuse 36. In Figur 6 ist eine vertikale Schnittebene A-A eingezeichnet. Die zugehörige Schnittzeichnung ist in Figur 8 dargestellt. Man erkennt, wie das Wasser durch den Querkanal in Richtung eines Pfeils 92 zu einem Anschlussstutzen 94 fließt. An den Anschlussstutzen 94 wird der Schlauch 22 angeschlossen. Über den Schlauch 22 wird das unbehandelte Rohwasser der Enthärtungseinrichtung 12 zugeführt.

In der Enthärtungseinrichtung 12 ist ein Ionentauschergranulat vorgesehen. Wasser, das durch das Granulat geleitet wird, wird vollständig enthärtet. Dann hat das Wasser einen Härtegrad 0. Es sind keine Kalziumionen mehr im Wasser vorhanden. Je nach Granulat kann auch eine Entmineralisierung erfolgen. Das Ionentauschergranulat ist in einem Behälter 96 angeordnet. Das Wasser wird über den Schlauch 20 zum Behälter 96 geleitet. Dort wird es vollständig enthärtet und durch den Schlauch 22 zurück zur Kombinationsarmatur 16 geleitet.

Die gemeinsame Steuerung 50 ist an der Enthärtungseinrichtung 12 vorgesehen. Dort laufen die Signal- und Steuerleitungen der Sensoren zusammen. Entsprechend braucht die Kombinationsarmatur 16 keine eigene Steuer- und/oder Auswerteeinheit. Die Kombinationsarmatur kann entsprechend mit geringeren Kosten gefertigt werden. Die Initialisierung und Einrichtung einer weiteren Steuereinheit entfällt.

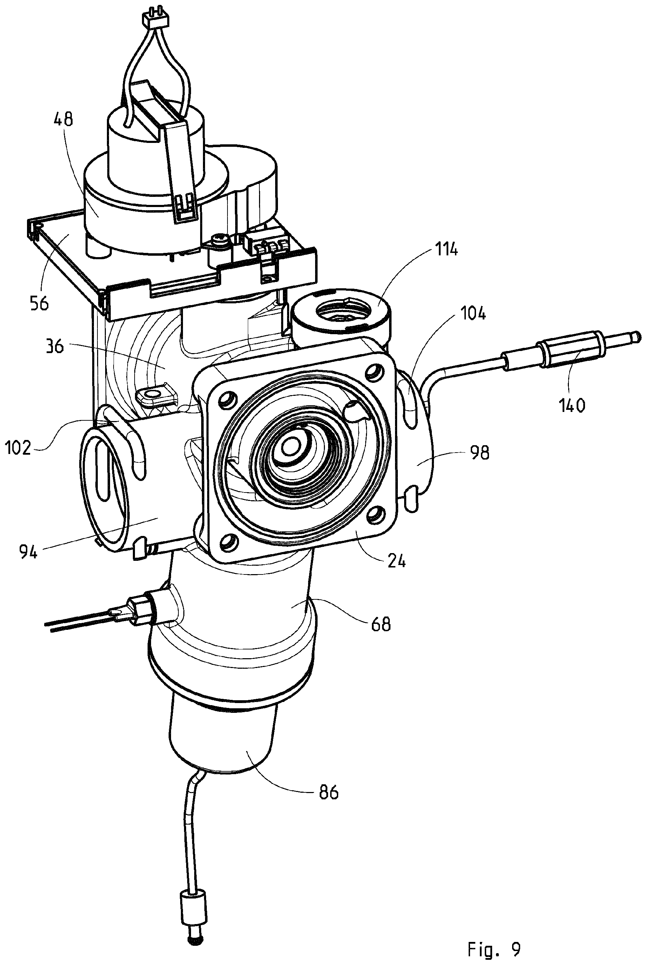

Das in dem Ionentauscher vollständig enthärtete oder entmineralisierte Wasser fließt an einem Gehäusestutzen 98 zurück in die Kombinationsarmatur 16. Dies ist durch einen Pfeil 100 illustriert. Der Gehäusestutzen 98 fluchtet mit dem Gehäusestutzen 94 und dem Querkanal 88. Dies ist in Figur 8 und 9 gut zu erkennen. Die Schläuche 20 und 22 werden mit Klammern 102 und 104 axial fixiert. Die Klammern 102 und 104 werden durch Öffnungen 106 im Gehäusestutzen gesteckt und halten die Schläuche 20 und 22 in dem Stutzen, lassen aber eine Drehung zu.

Eine Verbindungsöffnung 108 verbindet das Innere des Gehäusestutzens 98 mit einem Ringkanal 110. Das Wasser fließt also weiter in den Ringkanal 110. Dies ist in Figur 8 durch einen Pfeil 112 illustriert. Der Ringkanal 110 umgibt den Zentralkanal 34. Das enthärtete Wasser fließt durch den Ringkanal 110 zum Flansch 28 und kann von dort in die Anschlussarmatur 18 mit dem Auslass zur Rohrleitung fließen.

In der Regel ist es gar nicht erwünscht, dass das gesamte Trinkwasser vollständig enthärtet oder entmineralisiert wird. Die Kapazität des Ionentauschers ist bei Vollentsalzung schnell erschöpft. Außerdem ist ein gewisses Maß an Kalziumionen für den menschlichen Konsum gesund. In der Kombinationsarmatur 16 ist daher eine Verschneidung (Mischung) von unbehandeltem Rohwasser mit vollenthärtetem oder vollentsalztem Wasser aus dem Ionentauscher 12 vorgesehen.

In Figur 8 ist eine Verschneideeinheit 114 zu erkennen, die am Stutzen 94 vorgesehen ist. Die Lage der Verschneideeinheit 114 ist in der Strömung vor dem Ionentauscher 12 vorgesehen. Die Verschneideeinheit sitzt in einem Gehäusestutzen 116. Der Gehäusestutzen 116 ist quer zum Gehäusestutzen 94 angeordnet und erstreckt sich vertikal nach oben. Das Innere des Gehäusestutzens 116 ist einerseits mit dem Inneren des Gehäusestutzens 94 verbunden. Andererseits ist das Innere des Gehäusestutzens 116 über einen Kanal 120 mit dem Ringkanal 110 verbunden, der zum Auslass führt. Dies ist in Figur 11 und Figur 13 zu erkennen. Die Strömungsrichtung des Rohwassers zum Verschneiden des enthärteten Wassers ist durch Pfeile 122 und 124 in Figur 11 und Figur 13 illustriert.

Die Einstellung der Verschneideeinrichtung 114 bestimmt, wieviel Rohwasser unter Umgehung des Ionentauschers 12 durch den Kanal 120 zum Ringkanal 110 geleitet wird. Die Komponenten der Verschneideeinrichtung 114 sind in Figur 12 als Explosionsdarstellung im Detail dargestellt. Ein Verschneidekolben 126 wird mit einer Dichtung 128 und einem Sicherungsring 130 in den Gehäusestutzen 116 eingesetzt. Die Dichtung 128 dichtet sowohl in radialer, als auch in axialer Richtung. Mit dem Sicherungsring 130 wird der Verschneidekolben 126 axial fixiert, bleibt aber drehbar. Ein Deckel 132 verschließt den Gehäusestutzen 116.

Der Verschneidekolben 126 ist im Wesentlichen zylindrisch und unten offen. Er hat eine dreieckige Öffnung 134 entlang des Mantels, die sich in Umfangsrichtung verjüngt. Auf der Oberseite weist der Verschneidekolben 126 eine Sechskantöffnung 136 auf. In die Sechskantöffnung 136 kann ein Werkzeug eingesteckt werden, mit dem der Verschneidekolben 126 um eine vertikale Achse gedreht werden kann. Ein angeformter oder aufgedruckter Pfeil 138 ist ein Hinweis auf die Lage der Öffnung 134. Im vorliegenden Ausführungsbeispiel zeigt der Pfeil 138 gerade in der entgegengesetzten Richtung zur Öffnung 134.

Die Drehung kann mit einem Werkzeug von Hand oder über eine eingreifende Welle mittels eines Motors bewirkt werden. Dann erfolgt die Steuerung des Motors ebenfalls mit der gemeinsamen Steuerung 50.

Mit der sich verjüngenden Öffnung 134 wird der Strömungsquerschnitt und damit der Volumenstrom des dem enthärteten Wasser beigemischten Rohwassers definiert. In Figur 13 ist eine Bohrung 145 zu erkennen, welche eine Verbindung zwischen dem Inneren des Stutzens 116 und dem Inneren des Verschneidekolbens 126 herstellt. Die Öffnung 134 im Verschneidekolben überlappt mit der Verbindung 120. Durch Drehen des Verschneidekolbens 126 wird der Öffnungsquerschnitt und folglich der Volumenstrom auf einen gewünschten Wert eingestellt. Der Einstellwinkel kann durch Kalibrierung ermittelt werden. Dann braucht der Nutzer nur den Pfeil 138 auf den angegebenen Wert auf einer Anzeige einstellen.

Die Anordnung ist mit Sensoren und Messgeräten versehen. Der Drucksensor 86 ermittelt den Ausgangsdruck des Druckminderers in der Druckminderer-Filterkombination 14. Dieses Signal wird mit einer Signalleitung an die Steuerung 50 weitergeleitet. Der Volumenstrommesser 78 erfasst mit einem Reedkontakt den Volumenstrom der durch den Ionentauscher 12 geleitet und enthärtet wird. Dieses Signal wird mit einer Signalleitung 144 an die Steuerung weitergeleitet. Der Leitfähigkeitsmesser 146 ermittelt die Leitfähigkeit des gefilterten Rohwassers. Dieses Signal wird mit einer Signalleitung 140 an die Steuerung 50 weitergeleitet. Statt einer Kabelübertragung kann auch eine drahtlose Übertragung der Daten vorgesehen sein. Die Steuerung 50 weist eine Auswerteeinheit zur Signalverarbeitung auf. Außerdem kann die Eingangshärte des Rohwassers eingegeben und gespeichert werden. Aus den Volumenstrom-Werten und/oder Druckwerten wird ermittelt, ob untypische und/oder unerwünschte Strömungszustände vorliegen, etwa Mikroleckage, Rohrbruch oder ein hoher Druckabfall am Filter. Ein entsprechendes Alarmsignal kann angezeigt oder an einen Server oder ein Mobilfunkendgerät übertragen werden. Je nach Zustand wird ein Steuersignal erzeugt, welches über ein Kabel oder drahtlos an den Motor 48 übertragen wird. Der Motor 48 schließt dann den Kugelhahn. Die Auswerteeinheit ermittelt mit einer geeigneten Kalibrierung die Wasserhärte aus den Leitfähigkeitswerten. Die Wasserhärte kann auf einem Display angezeigt werden. Dann kann die Verschneideeinheit von Hand oder mit einer Motorsteuerung automatisch nachjustiert werden. Im letzteren Fall wird ein geeignetes Steuersignal erzeugt.

Alle Signalleitungen laufen in der Steuer- und Auswerteeinheit 50 zusammen. Entsprechend ist nur eine Einheit 50 erforderlich. Die Steuer- und Auswerteeinheit ist am Ionentauscher 12 vorgesehen. Dieser nimmt ohnehin ein vergleichsweise großes Volumen ein und steht auf dem Boden. Die Geräte, die an der Wand im Bereich der Rohrleitung installiert werden, können ohne Steuer- und Auswerteeinheit besonders kompakt ausgestaltet sein. Außerdem wird nur eine Turbine für Leckageschutz und Ermittlung der Wasserhärte benötigt. Die Kombinationsarmatur ist daher nicht nur kostengünstiger, sondern auch klein und leicht, was die Montage erleichtert.

Wenn der Ionentauscher 12 erschöpft ist und das Wasser beim Durchströmen des Granulats nicht mehr vollständig enthärtet wird, muss dieser in üblicher Weise regeneriert werden. Dann kann die Verschneideeinrichtung auf den maximalen Durchlasswert eingestellt werden. Bei Verwendung eines Motors, kann dies beispielsweise nachts erfolgen, wenn in der Regel nur wenig Wasser verbraucht wird. Die Wasserversorgung erfolgt in diesem Zeitraum mit nicht-enthärtetem Rohwasser, ist aber nicht unterbrochen.

Die vorstehende Erfindung wurde hier anhand eines konkreten Ausführungsbeispiels beschrieben. Die Beschreibung dient jedoch nur zur Illustration der Erfindung. Der Umfang der Erfindung lässt eine Vielzahl von Variationen zu, die ausschließlich vom Schutzbereich der beigefügten Ansprüche bestimmt werden. So sind bestimmte Merkmale hinsichtlich Konstruktion, Material, Anordnung und Aufbau des Ausführungsbeispiels lediglich sinnvolle Ausgestaltungen. Rückflussverhinderer können an anderen Stellen eingesetzt werden. Messungen können an anderen Stellen erfolgen. Ein Ionentauscher kann durch andere geeignete Wasserbehandlungsmethoden ersetzt werden und die Anschlüsse können jede beliebige, dem Fachmann bekannte Ausgestaltung annehmen. Insbesondere können statt Flanschverbindungen auch andere Verbindungen, beispielsweise übliche Rohrleitungsverbindungen verwendet werden. Dies gilt für alle Merkmale und deren Kombinationen, solange in den Ansprüchen nicht eine bestimmte Kombination von Merkmalen als erfindungswesentlich offenbart ist.

Merkmale, welche gemeinsam mit anderen Merkmalen offenbart sind, können in der Regel auch alleine oder in Kombination mit anderen Merkmalen, die im Text oder in den Zeichnungen explizit oder implizit in den Ausführungsbeispielen offenbart sind, verwendet werden. Maße und Größen sind nur beispielhaft angegeben. Dem Fachmann ergeben sich geeignete Bereiche aus seinem Fachwissen und brauchen hier daher nicht näher erläutert werden. Die Offenbarung einer konkreten Ausgestaltung eines Merkmals bedeutet nicht, dass die Erfindung auf diese konkrete Ausgestaltung beschränkt werden soll. Vielmehr kann ein solches Merkmal durch eine Vielzahl anderer, dem Fachmann geläufigen Ausgestaltungen verwirklicht werden. Die Erfindung kann daher nicht nur in Form der erläuterten Ausgestaltungen verwirklicht werden, sondern durch alle Ausgestaltungen, welche vom Schutzbereich der beigefügten Ansprüche abgedeckt sind.

Die Begriffe "oben", "unten", "rechts" und "links" beziehen sich ausschließlich auf die beigefügten Zeichnungen. Es versteht sich, dass beanspruchte Vorrichtungen auch eine andere Orientierung annehmen können. Der Begriff "enthaltend" und der Begriff "umfassend" bedeuten, dass weitere, nicht-genannte Komponenten vorgesehen sein können. Unter dem Begriff "im Wesentlichen", "vorwiegend" und "überwiegend" fallen alle Merkmale, die eine Eigenschaft oder einen Gehalt mehrheitlich, d.h. mehr als alle anderen genannten Komponenten oder Eigenschaften des Merkmals aufweisen, also bei zwei Komponenten beispielsweise mehr als 50%.

## Patentansprüche

1. Armaturenanordnung (10) enthaltend eine Kombinationsarmatur (16), eine an die Kombinationsarmatur (16) angeschlossene Wasserenthärtungs- oder andere Wasserbehandlungseinheit (12) und eine Steuer- und Auswerteeinheit, wobei die Kombinationsarmatur enthält
(a) ein Gehäuse (36) mit einem an eine Trinkwasserversorgung anschließbaren Einlass (34) und einem Auslass (110) zur Bereitstellung von Trinkwasser mit definierter Härte oder anderen Behandlungseigenschaften;
(b) einen Auslassanschluss (94) und einen Einlassanschluss (98) zum Anschließen der Wasserbehandlungseinheit (12);
(c) eine Verschneideeinrichtung (114) zum Verschneiden von behandeltem Trinkwasser mit Rohwasser in Form von unbehandeltem Trinkwasser zur Bereitstellung von Trinkwasser mit definierter Härte oder anderen Behandlungseigenschaften, mit Stellmitteln zur Einstellung der Menge an Rohwasser, welche dem behandelten Trinkwasser beigemischt wird;
(d) einen Strömungsmesser (78) zur Erfassung der Strömungsmenge durch die Kombinationsarmatur, mit Mitteln zur Übertragung der vom Strömungsmesser erzeugten Signale an die Steuer- und Auswerteeinheit; und
(e) eine Absperrung (58) zum Absperren der gesamten Strömung durch die Kombinationsarmatur (16);
**dadurch gekennzeichnet, dass**
(f) die Steuer- und Auswerteeinheit Mittel zur Erfassung von Leckage oder anderen untypischen und/oder unerwünschten Strömungszuständen aus den vom Strömungsmesser übertragenen Signalen aufweist; und
(g) die Absperrung (58) mit Steuersignalen der Steuer- und Auswerteeinheit in Abhängigkeit vom zugehörigen Strömungszustand und vom Zustand der Wasserbehandlungseinheit oder der durch die Wasserbehandlungseinheit geflossenen Rohwassermenge steuerbar ist.

2. Armaturenanordnung nach Anspruch 1, **dadurch gekennzeichnet, dass** die Steuer- und Auswerteeinheit in die Wasserbehandlungseinheit integriert ist.

3. Armaturenanordnung nach Anspruch 1 oder 2, **dadurch gekennzeichnet, dass** eine Druckminderer-Filterkombination oder ein Druckminderer und/oder ein Filter im Strömungsweg zwischen Einlass (34) und Auslass (110) vorgesehen ist.

4. Armaturenanordnung nach einem der vorgehenden Ansprüche, **dadurch gekennzeichnet, dass** der Strömungsmesser eine Turbine umfasst, die gemeinsam mit einem Rückflussverhinderer in einer Patrone angeordnet ist, und die Patrone als Ganzes in einen Gehäusestutzen einsetzbar ist.

5. Armaturenanordnung nach einem der vorgehenden Ansprüche, **gekennzeichnet durch** einen Drucksensor im Strömungsweg vor dem Volumenstrommesser, dessen Signale an die Steuer- und Auswerteeinheit übertragen werden.

6. Armaturenanordnung nach einem der vorgehenden Ansprüche, **dadurch gekennzeichnet, dass** die Absperrung von einem motorbetriebenen Kugelhahn gebildet ist.

7. Armaturenanordnung nach einem der vorgehenden Ansprüche, **dadurch gekennzeichnet, dass** die Verschneideeinrichtung (114) motorbetrieben ist, und die Steuer- und Auswerteeinheit Mittel zur Regelung der Härte am Auslass (18) auf einen definierten Wert nach Maßgabe der Signale des Strömungsmessers und/oder eines Leitfähigkeitssensors aufweist.

8. Armaturenanordnung nach einem der vorgehenden Ansprüche, **dadurch gekennzeichnet, dass** die Stellmittel der Verschneideeinrichtung (114) einen Verschneidkolben mit einer sich verjüngenden Öffnung umfassen, welche den Strömungsquerschnitt und damit den Volumenstrom des dem enthärteten Wasser beigemischten Rohwassers definiert.

9. Armaturenanordnung nach einem der vorgehenden Ansprüche, **dadurch gekennzeichnet, dass**
(a) der Einlassanschluss und der Auslassanschluss miteinander fluchten,
(b) ein Zentralkanal quer zur Längsachse von Einlassanschluss und Auslassanschluss vorgesehen ist, wobei die Absperrung den Zentralkanal sperrt,
(c) ein Ventil vorgesehen ist, welches den Verbindungskanal (90) vom Einlassanschluss (22) zum Auslassanschluss (24) in einer Betriebsstellung sperrt und in einer Wartungsstellung öffnet; und
(d) wobei das Ventil die Verbindung zum Auslassanschluss (24) in der Wartungstellung sperrt.

10. Armaturenanordnung nach einem der vorgehenden Ansprüche, **gekennzeichnet durch** einen Rückflussverhinderer (36, 62, 56) im Einlass (16), vor der Verschneideeinrichtung (66) und/oder zwischen Einlassanschluss (22) und Auslass (18).

11. Armaturenanordnung nach einem der vorgehenden Ansprüche, **gekennzeichnet durch** einen Leitfähigkeitssensor (146) mit Mitteln zur Übertragung der vom Leitfähigkeitssensor erzeugten Signale an die Steuer- und Auswerteeinheit.

12. Verfahren zur Aufbereitung von Trinkwasser mit einer Armaturenanordnung nach einem der vorgehenden Ansprüche, **gekennzeichnet durch** die Schritte:
(a) Erfassung der durch die Kombinationsarmatur fließenden Strömungsmenge des Rohwassers mit einem Strömungsmesser und Übertragung der vom Strömungsmesser erzeugten Signale an eine Steuer- und Auswerteeinheit;
(b) Behandeln von in die Armatur fließendem Rohwasser mit einer Wasserbehandlungseinheit;
(c) Verschneiden von behandeltem Trinkwasser mit Rohwasser in Form von unbehandeltem Trinkwasser zur Bereitstellung von Trinkwasser mit definiertem Behandlungsgrad;
(d) Erfassung von Leckage oder anderen untypischen und/oder unerwünschten Strömungszuständen aus den vom Strömungsmesser übertragenen Signalen mit der Steuer- und Auswerteeinheit; und
(e) Absperren der gesamten Strömung durch die Kombinationsarmatur durch Steuerung einer Absperrung (58) mit Steuersignalen der Steuer- und Auswerteeinheit in Abhängigkeit vom zugehörigen Strömungszustand und vom Zustand der Wasserbehandlungseinheit oder der durch die Wasserbehandlungseinheit geflossenen Rohwassermenge.

## Claims

1. Fitting assembly (10) comprising a combination fitting (16), a water softening- or other water treatment unit (12) connected to the combination fitting (16) and a control- and processing unit, wherein the combination fitting comprises:
(a) a housing (36) with an inlet (34) configured to be connected to a drinking water source and an outlet (110) for providing drinking water with a defined water hardness or other treatment properties;
(b) an outlet connection (94) and an inlet connection (98) for connecting the water treatment unit (12);
(c) a mixing unit (114) for mixing treated drinking water with raw water in the form of untreated drinking water for providing drinking water having a defined water hardness or other treatment properties, with setting means for setting the amount of raw water which is mixed with the treated drinking water;
(d) a flow meter (78) for detecting the flow through the combination fitting with means for transmitting the signals generated by the flow meter to the control- and processing unit; and
(e) a shut-off valve (58) for shutting off the entire flow through the combination fitting (16);
**characterized in that**
(f) the control- and processing unit is provided with means for detecting leakage or other untypical and/or unwanted flow states from the signals transmitted by the flow meter; and
(g) the shut-off valve (58) is controlled with the control signals from the control- and processing unit depending on the corresponding flow state and from the state of the water treatment unit or the flow volume through the water treatment unit.

2. Fitting assembly according to claim 1, **characterized in that** the control- and processing unit is integrated in the water treatment unit.

3. Fitting assembly according to claim 1 or 2, **characterized in that** a pressure reducer-filter combination or a pressure reducer and/or a filter is provided in the flow path between the inlet (34) and the outlet (110).

4. Fitting assembly according to any of the preceding claims, **characterized in that** the flow meter comprises a turbine which is arranged inside a cartridge together with a backflow preventer and the cartridge is configured to be inserted in one piece into a housing socket.

5. Fitting assembly according to any of the preceding claims, **characterized by** a pressure sensor in the flow path before the volume flow meter generating signals transmitted to the control- and processing unit.

6. Fitting assembly according to any of the preceding claims, **characterized in that** the shut-off valve is formed by a motor-driven ball valve.

7. Fitting assembly according to any of the preceding claims, **characterized in that** the mixing unit (114) is driven by a motor and that the control- and processing unit is provided with means for controlling the hardness at the outlet (18) to a defined value according to the signals of the flow meter and/or a conductivity sensor.

8. Fitting assembly according to any of the preceding claims, **characterized in that** the setting means of the mixing unit (114) comprise a mixing piston with a reducing opening which defines the flow cross section and thereby the flow volume of the raw water mixed to the softened water.

9. Fitting assembly according to any of the preceding claims, **characterized in that**
(a) the inlet connection and the outlet connection are aligned,
(b) a central channel is provided laterally to the longitudinal axis of the inlet connection and the outlet connection, wherein the shut-off valve controls the central channel,
(c) a valve is provided which shuts off the connecting channel (90) between the inlet connection (22) and the outlet connection (24) in an operating position and opens in a servicing position; and
(d) wherein the valve blocks the connection with the outlet connection (24) in the servicing position.

10. Fitting assembly according to any of the preceding claims, **characterized by** a backflow preventer (36, 62, 56) in the inlet (16), before the mixing unit (66) and/or between the inlet connection (22) and the outlet (18).

11. Fitting assembly according to any of the preceding claims, **characterized by** a conductivity sensor (146) with means for transmitting the signals generated by the conductivity sensor to the control- and processing unit.

12. Method for treating drinking water with a fitting assembly according to any of the preceding claims, **characterized by** the steps of:
(a) detecting the flow volume of raw water flowing through the combination fitting by means of a flow meter and transmitting the signals generated by the flow meter to a control- and processing unit;
(b) treating the raw water flowing through the fitting in a water treatment unit;
(c) mixing treated drinking water with raw water in the form of untreated drinking water for providing drinking water with a well defined treatment degree;
(d) detecting leakage or other untypical and/or unwanted flow states with the control- and processing unit from the signals transmitted by the flow meter; and
(e) shutting off the entire flow through the combination fitting by controlling a shut-off valve (58) with control signals of the control- and processing unit depending from the corresponding flow state and from the state of the water treatment unit or the amount of raw water flowing through the water treatment unit.

## Revendications

1. Disposition de pièce de robinetterie (10) comprenant une pièce de robinetterie combinée (16), une unité d'adoucisseur d'eau ou toute autre unité de traitement de l'eau (12) raccordée à la pièce de robinetterie combinée (16) et une unité de commande et d'évaluation, la pièce de robinetterie combinée comprenant
(a) un boîtier (36) muni d'une entrée (34) pouvant être raccordée à un dispositif d'alimentation en eau et une sortie (110) pour fournir de l'eau potable présentant une dureté définie ou toute autre propriété de traitement ;
(b) un raccord de sortie (94) et un raccord d'entrée (98) destinés à raccorder l'unité de traitement de l'eau (12) ;
(c) une installation de coupage (114) destinée à couper de l'eau potable traitée avec de l'eau brute se présentant sous forme d'eau potable non traitée afin de fournir de l'eau potable présentant une dureté définie ou tout autre propriété de traitement, et munie de moyens de réglage destinés à régler la quantité d'eau brute qui sera mélangée à l'eau potable traitée ;
(d) un débitmètre (78) destiné à saisir le débit de courant traversant la pièce de robinetterie combinée, muni de moyens destinés à transmettre les signaux générés par le débitmètre à l'unité de commande et d'évaluation ; et
(e) un dispositif de blocage (58) destiné à bloquer l'ensemble du courant traversant la pièce de robinetterie combinée (16) ;
**caractérisée en ce que**
(f) l'unité de commande et d'évaluation présente des moyens destinés à détecter des fuites ou tout autre état du courant atypique et/ou indésirable à partir des signaux transmis par le débitmètre ; et
(g) le dispositif de blocage (58) peut être commandé à l'aide de signaux de commande de l'unité de commande et d'évaluation en fonction de l'état du courant associé et de l'état de l'unité de traitement de l'eau ou de la quantité d'eau brute traversant l'unité de traitement d'eau.

2. Disposition de pièce de robinetterie selon la revendication 1, **caractérisée en ce que** l'unité de commande et d'évaluation est intégrée dans l'unité de traitement d'eau.

3. Disposition de pièce de robinetterie selon la revendication 1 ou 2, **caractérisée en ce qu'**une combinaison de réducteur de pression et de filtre ou un réducteur de pression et/ou un filtre sont prévus dans le chemin d'écoulement entre l'entrée (34) et la sortie (110).

4. Disposition de pièce de robinetterie selon l'une quelconque des revendications précédentes, **caractérisée en ce que** le débitmètre comprend une turbine disposée avec un clapet anti-retour dans une cartouche, et la cartouche peut être insérée en entier dans une prise de boîtier.

5. Disposition de pièce de robinetterie selon l'une quelconque des revendications précédentes, **caractérisée par** un capteur de pression situé dans le chemin d'écoulement avant le débitmètre dont les signaux sont transmis à l'unité de commande et d'évaluation.

6. Disposition de pièce de robinetterie selon l'une quelconque des revendications précédentes, **caractérisée en ce que** le dispositif de blocage est formé d'un robinet à boisseau sphérique actionné par moteur.

7. Disposition de pièce de robinetterie selon l'une quelconque des revendications précédentes, **caractérisée en ce que** l'installation de coupage (114) est actionné par moteur, et l'unité de commande et d'évaluation présente des moyens destinés à régler la dureté à la sortie (18) à une valeur définie en fonction des signaux du débitmètre et/ou d'un capteur de conductibilité.

8. Disposition de pièce de robinetterie selon l'une quelconque des revendications précédentes, **caractérisée en ce que** les moyens de réglage de l'installation de coupage (114) comprennent un piston de coupage muni d'un orifice se rétrécissant qui définit la section d'écoulement et ainsi le débit de l'eau brute mélangée à l'eau adoucie.

9. Disposition de pièce de robinetterie selon l'une quelconque des revendications précédentes, **caractérisée en ce que**
(a) le raccord d'entrée et le raccord de sortie sont alignés l'un sur l'autre,
(b) un canal central est prévu diagonalement par rapport au raccord d'entrée et au raccord de sortie, le dispositif de blocage bloquant le canal central,
(c) il est prévu une soupape bloquant le canal de liaison (90) du raccord d'entrée (22) jusqu'au raccord de sortie (24) dans une position de service et l'ouvre dans une position de maintenance ; et
(d) la soupape bloquant la liaison vers le raccord de sortie (24) en position de maintenance.

10. Disposition de pièce de robinetterie selon l'une quelconque des revendications précédentes, **caractérisée par** un clapet anti-retour (36, 62, 56) situé dans l'entrée (16) avant l'installation de coupage (66) et/ou entre le raccord d'entrée (22) et la sortie (18).

11. Disposition de pièce de robinetterie selon l'une quelconque des revendications précédentes, **caractérisée par** un capteur de conductibilité (146) muni de moyens destinés à transmettre les signaux générés par le capteur de conductibilité à l'unité de commande et d'évaluation.

12. Procédé destiné à traiter de l'eau potable à l'aide d'une disposition de pièce de robinetterie selon l'une quelconque des revendications précédentes, **caractérisé par** les étapes de :
(a) saisie du débit d'eau brute traversant la pièce de robinetterie combinée à l'aide d'un débitmètre et transmission des signaux générés par le débitmètre à une unité de commande et d'évaluation ;
(b) traitement de l'eau brute traversant la pièce de robinetterie à l'aide d'une unité de traitement de l'eau ;
(c) coupage de l'eau potable traitée avec de l'eau brute se présentant sous forme d'eau potable non traitée afin de fournir de l'eau potable présentant un niveau de traitement défini ;
(d) détection de fuites ou de toute autre état du courant atypique et/ou indésirable à partir des signaux transmis par le débitmètre à l'aide de l'unité de commande et d'évaluation ; et
(e) blocage de tout le courant traversant la pièce de robinetterie combinée en commandant un dispositif de blocage (58) à l'aide de signaux de commande de l'unité de commande et d'évaluation en fonction de l'état du courant associé et de l'état de l'unité de traitement de l'eau ou de la quantité d'eau brute traversant l'unité de traitement de l'eau.
